(19) Europäisches Patentamt
European Patent Office
Office européen des brevets

(11) Veröffentlichungsnummer : **0 095 695**
**B1**

(12) **EUROPÄISCHE PATENTSCHRIFT**

(45) Veröffentlichungstag der Patentschrift : **09.07.86**

(51) Int. Cl.⁴ : **C 08 F246/00**, C 08 F220/54, C 04 B 24/16, C 04 B 24/24

(21) Anmeldenummer : **83105084.4**

(22) Anmeldetag : **21.05.83**

(54) **Wässrige Kunststoffdispersion auf Basis eines Copolymers von olefinisch ungesättigten Verbindungen.**

(30) Priorität : **29.05.82 DE 3220384**

(43) Veröffentlichungstag der Anmeldung : **07.12.83 Patentblatt 83/49**

(45) Bekanntmachung des Hinweises auf die Patenterteilung : **09.07.86 Patentblatt 86/28**

(84) Benannte Vertragsstaaten : **AT BE CH DE FR GB IT LI NL SE**

(56) Entgegenhaltungen :
**FR-A- 2 275 518**
**GB-A- 1 466 600**

(73) Patentinhaber : **HOECHST AKTIENGESELLSCHAFT**
**Postfach 80 03 20**
**D-6230 Frankfurt am Main 80 (DE)**

(72) Erfinder : **Reinecke, Rolf, Dr.**
**Fichtestrasse 33**
**D-6200 Wiesbaden (DE)**
Erfinder : **Rinno, Helmut, Dr.**
**Goethestrasse 38**
**D-6238 Hofheim am Taunus (DE)**
Erfinder : **Schulz, Gerhardt, Dr.**
**Briegelweg 3**
**D-6100 Darmstadt (DE)**

**EP 0 095 695 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine wäßrige Kunststoffdispersion auf Basis eines Copolymers von olefinisch ungesättigten Verbindungen, ein Verfahren zur Herstellung dieser Kunststoffdispersion und die Verwendung dieser Kunststoffdispersion als Zementzusatzmittel.

Es ist bekannt, daß weiche Polymerisate ethylenisch ungesättigter Verbindungen im Gemisch mit üblichen anorganischen Füllstoffen die Basis für Kitte und Dichtungsmassen bilden (vgl. deutsche Offenlegungsschrift 15 69 910 = US-Patentschrift 3 551 374). Die Polymerisate stellen ein Gemisch dar aus (A) Emulsionspolymerisaten von Estern aus ethylenisch ungesättigten Carbonsäuren mit 3 bis 5 Kohlenstoffatomen und Alkanolen mit 1 bis 12 Kohlenstoffatomen und (B) Polymerisaten von Estern aus (Meth-) Acrylsäure und Alkanolen mit 2 bis 8 Kohlenstoffatomen und/oder von Vinylalkylethern mit 1 bis 4 Kohlenstoffatomen im Alkylrest und/oder von Butadien und/oder Polymerisaten von Isobutylen und/oder Isopren. Die vorgenannten Emulsionspolymerisate werden in Form von mindestens 50prozentigen wäßrigen Dispersionen eingesetzt; sie sollen möglichst Glastemperaturen von unter — 5 °C haben.

Ferner ist eine wäßrige Dispersion eines druckempfindlichen Mischpolymerisats beschrieben, das zusammengesetzt ist aus 0,1 bis 1,5 Gewichtsprozent 2-Acrylamido-2-methylpropansulfonsäure, mindestens einem Ester der Acrylsäure und/oder der Methacrylsäure mit 6 bis 20 Kohlenstoffatomen und einem Monomer aus der Gruppe der α-Olefine mit 2 bis 10 Kohlenstoffatomen, Vinylester von Alkansäuren mit 3 bis 10 Kohlenstoffatomen, Ethyl- und Methylester von Acrylsäure und Methycrylsäure, Acrylnitril, Methacrylnitril, Styrol, Vinyltoluol und/oder Vinylchlorid (vgl. deutsche Offenlegungsschrift 25 24 064 = US-Patentschriften 3 931 087 und 4 012 560). Das Mischpolymerisat hat eine Glasübergangstemperatur im Bereich von —15 bis —75 °C. Die Emulsion wird als Klebstoff in druckempfindlichen Klebestreifen, Filmen und Schäumen verwendet; sie haftet gut auf Harzoberflächen und auf Papier, Metall und gemalten Oberflächen.

Diese bekannten Dispersionen sind für eine Kombination mit dem mineralischen Bindemittel Zement nicht geeignet (vgl. Vergleichsbeispiele).

Aufgabe der Erfindung ist nun die Bereitstellung einer wäßrigen Kunststoffdispersion auf der Grundlage von hochelastischen Copolymeren mit einer niedrigen Einfriertemperatur, die mit Zement verträglich ist.

Die Erfindung betrifft eine wäßrige Kunststoffdispersion auf Basis eines Copolymers von olefinisch ungesättigten Verbindungen und ist dadurch gekennzeichnet, daß das Copolymer zusammengesetzt ist aus

(a) 90 bis 97,7 Gewichtsprozent Einheiten mindestens eines olefinisch ungesättigten Monomers, das frei ist von Amid- und Sulfogruppen,

(b) 0,5 bis 5 Gewichtsprozent Einheiten mindestens eines olefinisch ungesättigten Monomers mit einer Amidgruppe und

(c) 1,8 bis 5 Gewichtsprozent Einheiten mindestens eines olefinisch ungesättigten Monomers der Formel

$$H_2C=\overset{\overset{R^1}{|}}{C}-CO-X-\underset{\underset{R^3}{|}}{\overset{\overset{R^2}{|}}{C}}-(CH_2)_n-SO_3H$$

in der $R^1$, $R^2$ und $R^3$ gleich oder verschieden sind und jeweils ein Wasserstoffatom oder einen Methylrest bedeuten, X ein Sauerstoffatom oder eine Iminogruppe darstellt und n Null oder eine ganze Zahl von 1 bis 10 ist, und eine Einfriertemperatur von höchstens 20 °C aufweist.

Vorzugsweise beträgt die Einfriertemperatur des Copolymers höchstens —20 °C.

Die Erfindung betrifft ferner ein Verfahren zur Herstellung einer wäßrigen Kunststoffdispersion durch Polymerisieren von olefinisch ungesättigten Verbindungen in einem wäßrigen Medium unter üblichen Bedingungen, das dadurch gekennzeichnet ist, daß man als olefinisch ungesättigte Verbindungen

(a) mindestens ein olefinisch ungesättigtes Monomer, das frei ist von Amid- und Sulfogruppen,

(b) mindestens ein olefinisch ungesättigtes Monomer mit einer Amidgruppe und

(c) mindestens ein olefinisch ungesättigtes Monomer der Formel

$$H_2C=\overset{\overset{R^1}{|}}{C}-CO-X-\underset{\underset{R^3}{|}}{\overset{\overset{R^2}{|}}{C}}-(CH_2)_n-SO_3H$$

in der $R^1$, $R^2$ und $R^3$ gleich oder verschieden sind und jeweils ein Wasserstoffatom oder einen Methylrest bedeuten, X ein Sauerstoffatom oder eine Iminogruppe darstellt und n Null oder eine ganze Zahl von 1 bis

10 ist, verwendet, wobei das resultierende Copolymer eine Einfriertemperatur von höchstens 20 °C aufweist.

Schließlich betrifft die Erfindung auch die Verwendung der oben gekennzeichneten Kunststoffdispersion als Zementzusatzmittel.

Das olefinisch ungesättigte Monomer, das frei ist von Amid- und Sulfogruppen (Gruppe a), wird in einer Menge von 90 bis 97,7, vorzugsweise 92 bis 97 Gewichtsprozent eingesetzt, das olefinisch ungesättigte Monomer mit einer Amidgruppe (Gruppe b) in einer Menge von 0,5 bis 5, vorzugsweise 1 bis 4 Gewichtsprozent, und das olefinisch ungesättigte Monomer mit einer Sulfogruppe (Gruppe c) in einer Menge von 1,8 bis 5, vorzugsweise 2 bis 4 Gewichtsprozent (jeweils bezogen auf die Gesamtmonomermenge).

Zur Einstellung einer gewünschten Einfriertemperatur des in der erfindungsgemäßen Kunststoffdispersion enthaltenen Copolymers werden Monomere der Gruppe (a), die Homopolymere mit relativ niedriger Einfriertemperatur (unterhalb 0 °C) bilden, mit anderen Monomeren der Gruppe (a), die Homopolymere mit relativ hoher Einfriertemperatur (oberhalb 20 °C) bilden, miteinander kombiniert. Die Bestimmung der Einfriertemperatur erfolgt im Rahmen der Erfindung durch Differentialthermoanalyse. In einfachen Fällen kann die Zusammensetzung eines Copolymers mit einer gewünschten Einfriertemperatur $T_g$ (Kelvin) auch aus der Beziehung

$$\frac{1}{T_g} = \sum_{1}^{i} \frac{W_i}{T_{gi}}$$

errechnet werden, wobei $T_{gi}$ die Einfriertemperatur des Homopolymers i in Kelvin ist und $W_i$ der Gewichtsanteil des Homopolymers i im Copolymer. Angaben über Einfriertemperaturen verschiedener Homopolymere sind auch dem Polymer Handbook von Brandrup/Immergut, Ausgabe 1975, Seiten III/139 bis 192, zu entnehmen.

Monomere, die Homopolymere mit niedriger Einfriertemperatur bilden, sind insbesondere Alkylester von olefinisch ungesättigten Monocarbonsäuren mit 3, 4 oder 5 Kohlenstoffatomen oder von Dicarbonsäuren mit 4 oder 5 Kohlenstoffatomen, die im Alkylrest jeweils 4 bis 18, vorzugsweise 4 bis 12, nicht-tertiäre Kohlenstoffatome aufweisen, sowie Ethylen. Solche Alkylester sind vor allem Ester der Acrylsäure, Crotonsäure, Fumarsäure, Maleinsäure oder Itaconsäure, z. B. n-Butylacrylat, n-Hexylacrylat, 2-Ethylhexylacrylat, n-Octylacrylat, Laurylacrylat, Tridecylacrylat, n-Butylmethacrylat, n-Octylmethacrylat, 2-Ethylhexylmethacrylat, Laurylmethacrylat, n-Butylcrotonat, n-Octylcrotonat, Dibutylfumarat, Dioctylfumarat, Dibutylmaleinat, Dioctylmaleinat, Dibutylitaconat und Dioctylitaconat.

Monomere, die Homopolymere mit hoher Einfriertemperatur bilden, sind insbesondere niedere Alkylester der Methacrylsäure mit 1 bis 3 Kohlenstoffatomen im Alkylrest, ferner Vinylester von niederen Carbonsäuren mit vorzugsweise 2 bis 4 Kohlenstoffatomen sowie Styrol, Acrylnitril und Vinylchlorid. Geeignete Methacrylsäureester sind vor allem Methylmethacrylat und Ethylmethacrylat, und geeignete Vinylester sind Vinylacetat, Vinylpropionat und Vinylbutyrat.

Vorteilhaft ist die Mitverwendung eines Monomers innerhalb der Gruppe (a), das zur Verbesserung der Stabilität der Dispersion dient. Hierzu eignen sich insbesondere olefinisch ungesättigte Monocarbonsäuren mit 3, 4 oder 5 Kohlenstoffatomen oder Dicarbonsäuren mit 4 oder 5 Kohlenstoffatomen, z. B. Acrylsäure, Methacrylsäure, Crotonsäure, Fumarsäure, Maleinsäure oder Itaconsäure. Die Carbonsäure wird in einer Menge von null bis 5 Gewichtsprozent, vorzugsweise 1 bis 3 Gewichtsprozent, eingesetzt (bezogen auf die Gesamtmonomermenge).

Gegebenenfalls wird zusätzlich noch ein mehrfunktionelles Monomer eingesetzt, das zur Herstellung von vernetzten Copolymeren dient. Hierzu eignen sich insbesondere Polyenverbindungen oder hydroxylgruppenhaltige olefinisch ungesättigte Verbindungen, die auch mit einem niederen Alkanol verethert sein können. Polyenverbindungen sind vor allem Polyacrylate, Polymethacrylate, Polyvinylverbindungen und Polyallylverbindungen, z. B. Ethylenglykoldiacrylat, Butandiol-(1,4)-dimethylacrylat, Divinylbenzol, Tetraallyloxethan und Pentaerythrittriacrylat. Geeignete Hydroxylverbindungen sind beispielsweise 2-Hydroxyethylacrylat, 2-Hydroxyethylmethacrylat und N-Methylolacrylamid. Das mehrfunktionelle Monomer wird in einer Menge von null bis 10 Gewichtsprozent, vorzugsweise null bis 5 Gewichtsprozent eingesetzt (bezogen auf die Gesamtmenge der Monomeren), wobei die Menge der Monomeren aus der Gruppe (a) entsprechend vermindert wird.

Als olefinisch ungesättigtes Monomer mit einer Amidgruppe (Gruppe b) wird ein Amid einer olefinisch ungesättigten Monocarbonsäure mit 3, 4 oder 5 Kohlenstoffatomen eingesetzt, nämlich Acrylamid, Methacrylamid oder Crotonsäureamid.

Ein wesentliches Merkmal der Erfindung ist der Einsatz eines Monomers der Gruppe b in Kombination mit einem olefinisch ungesättigten Monomeren (Gruppe c) der Formel

$$H_2C=\overset{\overset{\displaystyle R^1}{|}}{C}-CO-X-\overset{\overset{\displaystyle R^2}{|}}{\underset{\underset{\displaystyle R^3}{|}}{C}}-(CH_2)_n-SO_3H$$

in der $R^1$, $R^2$ und $R^3$ gleich oder verschieden sind und jeweils ein Wasserstoffatom oder einen Methylrest bedeuten, X ein Sauerstoffatom oder eine Iminogruppe darstellt und n Null oder eine ganze Zahl von 1 bis 10, vorzugsweise 1 bis 3, ist.

Besonders geeignete Sulfonsäuren der Gruppe c sind ω-Acrylamido-ω,ω-dimethyl-alkansulfonsäuren mit 1, 2 oder 3 Kohlenstoffatomen in der Alkangruppe, d. h. Verbindungen der Formel

$$H_2C{=}CH{-}CO{-}NH{-}C(CH_3)_2{-}(CH_2)_n{-}SO_3H$$

in der n 1, 2 oder 3 bedeutet.

Diese Sulfonsäuren sind entweder über eine Estergruppe oder über eine Amidgruppe an Acrylsäure oder Methacrylsäure gebunden. Beispiele hierfür sind 3-Sulfopropylacrylat, 3-Sulfopropylmethacrylat, 2-Sulfoethylacrylat und 2-Sulfoethylmethacrylat sowie 2-Methacrylamido-2,2-dimethylethansulfonsäure, 2-Acrylamido-ethansulfonsäure, 2-Methacrylamido-ethansulfonsäure, 2-Acrylamido-n-butansulfonsäure, 2-Methacrylamido-n-butansulfonsäure, 2-Methacrylamido-isobutansulfonsäure und insbesondere 2-Acrylamido-2,2-dimethylethansulfonsäure.

Die Herstellung der erfindungsgemäßen Dispersion erfolgt durch Polymerisieren der jeweiligen Monomeren in einem wäßrigen Medium unter den üblichen Bedingungen der Emulsionspolymerisation, nämlich in Gegenwart eines radikalbildenden Initiators und eines Emulgators sowie gegebenenfalls in Gegenwart eines Schutzkolloids und eines Reglers. Die Polymerisationstemperatur beträgt normalerweise null bis 100 °C, vorzugsweise 20 bis 90 °C. Die Polymerisation wird in Form eines « batch »-Verfahrens oder eines Dosierverfahrens durchgeführt; das Dosierverfahren ist ein Monomerzulaufverfahren oder vorzugsweise ein Emulsionszulaufverfahren.

Beim Emulsionszulaufverfahren wird zunächst ein Gemisch aus Wasser und gegebenenfalls bis zu 30 Gewichtsprozent einer wäßrigen Monomeremulsion in einem Reaktionsgefäß vorgelegt. Die Monomeremulsion besteht aus Wasser, den Monomeren und dem Emulgator sowie gegebenenfalls dem Regler und Schutzkolloid. Die Vorlage wird dann auf die Polymerisationstemperatur erwärmt, und nach Einsetzen der Reaktion wird der Rest der Monomeremulsion unter Einhalten der gewünschten Reaktionstemperatur und ständiger Bewegung des Reaktionsgemisches, vorzugsweise unter Rühren, zudosiert. Vorzugsweise werden die Monomeren der Gruppen b und c parallel zu dem oder den Monomeren der Gruppe a zudosiert. Gleichzeitig mit der Monomeremulsion wird der Initiator zudosiert. Nach Beendigung der Zudosierung wird die erhaltene Dispersion noch eine Zeitlang nachgeheizt. Nach Abkühlen auf Raumtemperatur wird die Dispersion durch Zugabe einer wasserlöslichen Base, vorzugsweise einem Alkalihydroxid oder Ammoniak, auf einen pH-Wert von 3 bis 12, vorzugsweise 7 bis 10, eingestellt.

Zur Herstellung der Dispersion sind alle bei der Emulsionspolymerisation gebräuchlichen Emulgatoren geeignet, d. h. ionische und/oder nichtionische Emulgatoren. Als ionische Emulgatoren werden bevorzugt anionische Emulgatoren eingesetzt, insbesondere Alkalisalze oder Ammoniumsalze von Schwefelsäurepartialestern oder Phosphorsäurepartialestern von aliphatischen Alkoholen oder Alkylphenolen, die gegebenenfalls mit bis zu 50 mol Ethylenoxid pro Hydroxylgruppe umgesetzt sind. Ebenfalls geeignet sint Alkyl- oder Arylsulfonate oder Mono- oder Diester der Sulfobernsteinsäure. Beispiele hierfür sind das Natriumsalz oder das Ammoniumsalz des Schwefelsäurehalbesters eines mit 7 bis 8 mol Ethylenoxid umgesetzten Tri-t-butylphenols, Natriumlaurylsulfat, das Natriumsalz eines Laurylalkoholethersulfates, das 2 bis 3 mol Ethylenoxid enthält, Natriumdodecylbenzolsulfonat, Natriumtetrapropylenbenzolsulfonat oder das Natriumsalz des Sulfobernsteinsäuredihexylesters. Als nichtionische Emulgatoren eignen sich insbesondere Polyglykolether von langkettigen Alkanolen, die vorzugsweise 10 bis 20 Kohlenstoffatome aufweisen, oder von Alkylphenolen mit vorzugsweise 6 bis 12 Kohlenstoffatomen im Alkylrest, wobei die Anzahl der Ethylenoxid-Einheiten im Bereich von 4 bis 100 liegt. Anlagerungsprodukte von Ethylenoxid an Polypropylenglykol sind ebenfalls geeignet. Beispiele für nichtionische Emulgatoren sind Umsetzungsprodukte von Ethylenoxid mit Laurylalkohol, Stearylalkohol, Oleylalkohol, Octylphenol, Nonylphenol, Diisopropylphenol, Triisopropylphenol, Di-t-butylphenol und Tri-t-butylphenol. Die Gesamtmenge der Emulgatoren beträgt vorzugsweise 0,1 bis 5 Gewichtsprozent (bezogen auf die Gesamtmonomermenge).

Die Emulsionspolymerisation wird gegebenenfalls in Gegenwart eines Schutzkolloids durchgeführt, dessen Menge bis zu 2 Gewichtsprozent beträgt (bezogen auf die Gesamtmonomermenge). Geeignete Schutzkolloide sind beispielsweise Polyvinylalkohol, Poly-N-vinylpyrrolidon, Hydroxyethylcellulose, Carboxymethylcellulose oder Copolymere von Maleinsäure mit Vinylverbindungen wie Vinylalkylethern, Styrol, Ethylen oder Propylen.

Die Polymerisation erfolgt in Gegenwart eines radikalbildenden Initiators, der in einer Menge von 0,1 bis 1 Gewichtsprozent (bezogen auf die Gesamtmonomermenge) eingesetzt wird. Besonders geeignet sind wasserlösliche anorganische Perverbindungen, die je nach Polymerisationstemperatur allein oder in Kombination mit einem Reduktionsmittel verwendet werden. Die Menge des Reduktionsmittels beträgt ebenfalls 0,1 bis 1 Gewichtsprozent (bezogen auf die Gesamtmonomermenge). Wasserlösliche Perverbindungen sind insbesondere Alkalisalze oder Ammoniumsalze der Peroxydischwefelsäure oder der Peroxydiphosphorsäure, z. B. Natriumperoxydisulfat, Kaliumperoxydisulfat, Ammoniumperoxydisulfat, Natriumperoxydiphosphat und Ammoniumperoxydiphosphat. In Kombination mit Reduktionsmitteln können auch organische Perverbindungen eingesetzt werden, insbesondere Diacylperoxide wie Dibenzoylperoxid, Diacetylperoxid oder Dilauroylperoxid sowie Alkylester von Percarbonsäuren

mit 4 bis 12 Kohlenstoffatomen, wobei der Alkylrest verzweigt ist und 3 bis 6 Kohlenstoffatome aufweist, z. B. Isopropylperisooctoat, t-Butylperisooctoat, Isopropylperisopivalat, t-Butylperisopivalat, Isopropylperisobutyrat und t-Butylperisobutyrat. Geeignete Reduktionsmittel sind insbesondere Alkalisalze oder Ammoniumsalze von reduzierend wirkenden schwefelhaltigen Säuren, z. B. Sulfite, Bisulfite, Pyrosulfite, Dithionite, Thiosulfate, Formaldehydsulfoxylate und Formamidinsulfinate, sowie auch Ascorbinsäure, Hydroxylamin oder Hydrazin. Das Reduktionsmittel wird gegebenenfalls in Kombination mit einer katalytisch wirksamen Menge eines als Beschleuniger dienenden Schwermetallsalzes eingesetzt, insbesondere eines Eisen-, Cobalt-, Cer- oder Vanadylsalzes.

Das erfindungsgemäße Verfahren wird gegebenenfalls in Gegenwart eines Reglers durchgeführt, der in einer Menge von höchstens 2 Gewichtsprozent (bezogen auf die Gesamtmonomermenge) eingesetzt wird. Als Regler eignen sich Mercaptane, insbesondere Alkylmercaptane mit 4 bis 16 Kohlenstoffatomen, z. B. n-Butylmercaptan, t-Butylmercaptan und vorzugsweise n-Dodecylmercaptan, sowie Thioglykol, Thioglycerin und Thioglykolsäure. Die Zugabe des Reglers erfolgt parallel mit der Zuführung der Monomeren oder auch vorher oder nachher.

Die erfindungsgemäße Kunststoffdispersion hat einen Feststoffgehalt von 40 bis 70, vorzugsweise von 50 bis 65 Gewichtsprozent. Sie ist mit Zement ohne weiteres verträglich und ist deswegen mit besonderem Vorteil als Zementzusatzmittel anwendbar, z. B. in Fugenmassen, Straßenbelagsmassen, Reparaturmassen, überzugsmassen, Zwischenschichten und Ausgleichsschichten. Ferner wird die Dispersion als Zusatzmittel in zementhaltigen, elastischen Bauklebmassen verwendet ; diese zeichnen sich durch erhöhte Wasserfestigkeit aus. Bei der erfindungsgemäßen Verwendung der Kunststoffdispersion als Zusatzmittel in zementhaltigen Baustoffen wird eine Baustoffmasse erhalten, die nach dem Aushärten in Abhängigkeit von der Menge des Zusatzmittels elastisch bis hochelastisch ist und eine flexible Folie bilden kann. Die dispersionshaltige Baustoffmasse steift nicht rascher an als ein vergleichbarer dispersionsfreier Mörtel und bildet nach dem Aushärten ein homogenes Gefüge. Weder die Verarbeitungseigenschaften noch die Festigkeitseigenschaften des Mörtels werden durch den Zusatz der erfindungsgemäßen Kunststoffdispersion nachteilig beeinflußt.

Diese Eigenschaft der Baustoffmasse war nicht zu erwarten, da normalerweise eine Baustoffmasse auf Zementbasis durch Zusatz einer üblichen Kunststoffdispersion in ihren Eigenschaften lediglich modifiziert wird und die Eigenschaften des mineralischen Bindemittels Zement dominieren.

Die Prüfung der Kunststoffdispersion auf Zementverträglichkeit wird wie folgt ausgeführt :

In einem Labormörtelmischer, der mit einem Planetenrührwerk versehen ist, werden 500 g Portlandzement PZ 35 T, 500 g Normalsand I, 1 000 g Normalsand II und 100 g der zu prüfenden Kunststoffdispersion 3 min lang mit soviel Wasser vermischt, daß die Gesamtwassermenge einschließlich des Wassergehaltes der Kunststoffdispersion 250 g beträgt. Der Wasser/Zement-Faktor beträgt somit 0,5. Die erhaltene Masse wird einer Steifeprüfung unterzogen, und zwar durch Ermittlung des Ausbreitmaßes 1) sofort nach der Herstellung und 2) nach 15 min. Als Gerät hierfür dient ein Rütteltisch gemäß DIN 1060 ; er besteht im wesentlichen aus einer mit einer Glasplatte belegten, stählernen, runden Tischplatte, die mittels einer drehbaren Hubwelle bei jeder Wellenumdrehung um 10 mm angehoben und wieder fallengelassen wird. Zur Bestimmung des Ausbreitmaßes wird die Mörtelmasse in einen mittig auf der Glasplatte aufgesetzten Setztrichter in zwei Schichten eingegeben. Jede Schicht wird mit einem hölzernen Normenstampfer von 250 g Gewicht durch 10 Stampfstöße verdichtet, wobei der Setztrichter fest auf die Glasplatte gedrückt wird. Nach der Verdichtung der Schichten und Aufgabe von etwas Zusatzmasse wird das überstehende Material mit einem Lineal abgestrichen. Nach 10 bis 15s wird der Setztrichter langsam lotrecht hochgehoben. Danach wird der Mörtelkegel durch 15 Hubstöße des Rütteltisches während etwa 15 s gerüttelt und dadurch auf der Glasplatte zu einem Kuchen ausgebreitet. Der Durchmesser dieses Kuchens wird in zwei zueinander senkrechten Richtungen gemessen (Ausbreitmaß). Die zu prüfende Kunststoffdispersion wird als nicht zementverträglich bewertet, wenn die Mörtelmasse innerhalb von 15 min krümelig wird oder stark ansteift, was aus einer starken Verminderung des Ausbreitmaßes ersichtlich ist.

Die erfindungsgemäße Kunststoffdispersion eignet sich insbesondere als Zusatzmittel für zementhaltige Baustoffmassen, die als hydraulisch erhärtende Dünnbettmörtel verwendet werden und sich durch eine erhöhte Haftzugfestigkeit auszeichnen. Die Haftzugfestigkeit wird wie folgt geprüft (vgl. DIN 18156 Teil 2) :

In einem Labormörtelmischer, der mit einem Planetenrührwerk versehen ist, werden 390 g Portlandzement PZ 35 F, 600 g Quarzsand F 35, 5 g eines handelsüblichen Celluloseethers, dessen 2 gewichtsprozentige Lösung bei 20 °C eine Viskosität von 6 000 mPa s aufweist, 150 g Wasser und 100 g der zu prüfenden Kunststoffdispersion, die auf einen Feststoffgehalt von 50 Gewichtsprozent eingestellt worden ist, miteinander vermischt. Der so erhaltene Prüfmörtel wird mit einem Kammspachtel auf eine Betonplatte aufgetragen, und auf die Mörtelschicht werden innerhalb von 5 min Keramikfliesen (4 cm × 4 cm) gelegt und jeweils 30 s lang mit 10 N belastet. Danach werden die erhaltenen Prüfbeläge waagerecht gelagert, und zwar a) 28 Tage lang bei Normalklima 23/50 nach DIN 50014, b) 7 Tage lang bei Normalklima 23/50 nach DIN 50014 und 21 Tage lang in Wasser bei 20 °C sowie c) 21 Tage lang bei Normalklima 23/50 nach DIN 50014 und 1 Tag lang in Wasser bei 20 °C. Zur Prüfung der Haftzugfestigkeit wird ein handelsübliches, geeichtes Gerät eingesetzt, dessen Zuganker mit einem Zweikomponentenkleber auf die Keramikfliesen geklebt werden.

Die folgenden Beispiele dienen zur näheren Erläuterung der Erfindung. Prozentangaben beziehen sich jeweils auf das Gewicht.

Beispiel 1

In einem Zweiliter-Dreihalskolben, der mit Rührer und Tropftrichter versehen war, wurden 200 g Wasser vorgelegt und auf eine Temperatur von 80 °C erhitzt. Zu dieser Vorlage wurden 10 g einer Monomeremulsion gegeben, die folgende Zusammensetzung hatte :

233 g Wasser
54 g einer 50prozentigen wäßrigen Lösung des Natriumsalzes eines mit 8 mol Ethylenoxid veretherten und sulfatierten Tri-t-butylphenols
27 g Methacrylamid
18 g 2-Acrylamido-2,2-dimethylethansulfonsäure
900 g 2-Ethylhexylacrylat
18 g Methacrylsäure
9 g Acrylsäure
9 g 2-Hydroxyethylmethacrylat
1,4 g Butandiol-(1,4)-dimethacrylat

Anschließend wurden 8 ml einer lösung von 1,9 g Ammoniumperoxydisulfat in 50 ml Wasser und 11 ml einer Lösung von 5,7 g Natriumdisulfit in 50 ml Wasser hinzugefügt. Danach wurde der Rest der Monomeremulsion innerhalb von 3 Stunden und parallel dazu jeweils der Rest der Ammoniumpersulfatlösung und der Natriumdisulfitlösung innerhalb von 5 Stunden zudosiert. Nach einer Nachreaktionszeit von weiteren 2 Stunden bei einer Temperatur von 80 °C wurde das Reaktionsgemisch auf Raumtemperatur abgekühlt und durch Zugabe von 10prozentiger Natronlauge auf einen pH-Wert von 8 eingestellt. Die erhaltene koagulatfreie Dispersion hatte einen Feststoffgehalt von 60,8 Prozent.

Beispiel 2

Beispiel 1 wurde wiederholt, wobei folgende Monomere eingesetzt wurden :

18 g Methacrylamid
9 g Acrylamid
18 g 2-Acrylamido-2,2-dimethylethansulfonsäure
720 g 2-Ethylhexylacrylat
180 g Methylmethacrylat
27 g Methacrylsäure
9 g 2-Hydroxyethylmethacrylat

Die erhaltene koagulatfreie Dispersion hatte einen Feststoffgehalt von 60,2 Prozent.

Beispiel 3

Beispiel 1 wurde wiederholt, wobei folgende Monomere eingesetzt wurden :

9 g Methacrylamid
36 g 2-Acrylamido-2,2-dimethylethansulfonsäure
810 g 2-Ethylhexylacrylat
90 g Acrylnitril
27 g Acrylsäure
9 g 2-Hydroxyethylmethacrylat

Die erhaltene koagulatfreie Dispersion hatte einen Feststoffgehalt von 58,1 Prozent.

Beispiel 4

Beispiel 1 wurde wiederholt, wobei folgende Monomere eingesetzt wurden :

27 g Methacrylamid
18 g 2-Acrylamido-2-dimethylethansulfonsäure
900 g 2-Ethylhexylacrylat
18 g Methacrylsäure
9 g Acrylsäure

Ferner wurden für die Monomeremulsion 603 g Wasser verwendet.
Die erhaltene koagulatfreie Dispersion hatte einen Feststoffgehalt von 49,7 Prozent.

Beispiel 5

In einem Zweiliter-Dreihalskolben, der mit Rührer und Tropftrichter versehen war, wurden 194 g Wasser vorgelegt und auf eine Temperatur von 80 °C erhitzt. Zu dieser Vorlage wurden 10 g einer Monomeremulsion gegeben, die folgende Zusammensetzung hatte :

297 g Wasser
28,7 g Nonylphenol, das mit 30 mol Ethylenoxid umgesetzt worden ist
2,6 g Nonylphenol, das mit 10 mol Ethylenoxid umgesetzt worden ist
17,2 g Methacrylamid
25,8 g 3-Sulfopropylmethacrylat
817 g 2-Ethylhexylacrylat
43 g Methylmethacrylat
25,8 g Methacrylsäure

Anschließend wurden 8 ml einer Lösung von 1,9 g Ammoniumperoxydisulfat in 50 ml Wasser und 11 ml einer lösung von 5,7 g Natriumdisulfit in 50 ml Wasser hinzugefügt. Danach wurde der Rest der Monomeremulsion innerhalb von 3 Stunden und parallel dazu jeweils der Rest der Ammoniumperoxidisulfatlösung und der Natriumdisulfitlösung innerhalb von 5 Stunden zudosiert. Nach einer Nachreaktionszeit von weiteren 2 Stunden bei einer Temperatur von 80 °C wurde das Reaktionsgemisch auf Raumtemperatur abgekühlt und durch Zugabe von 10prozentiger Natronlauge auf einen pH-Wert von 8 eingestellt. Die erhaltene koagulatfreie, stabile Dispersion hatte einen Feststoffgehalt von 59,5 %.

Vergleichsbeispiel 1

Entsprechend den Angaben aus Beispiel 1 der deutschen Offenlegungsschrift 25 24 064 wurde in einem Reaktionsgefäß ein Gemisch aus 217,9 g Wasser, 1,3 g Natriumbicarbonat und 2,5 kg Kaliumperoxydisulfat vorgelegt. Zu dieser Vorlage wurden 7 Prozent einer Monomeremulsion A und 5 Prozent einer Monomeremulsion B gegeben. Die Monomeremulsionen hatten folgende Zusammensetzungen :

A : 35,7 g Wasser
11,0 g Sulfatester eines Nonylphenol-Ethylenoxid-Kondensats mit 30 Ethylenoxid-Einheiten pro Molekül Kondensat
0,54 g Natriumhydroxid
2,75 g 2-Acrylamido-2,2-dimethylethansulfonsäure

B : 169,0 g Wasser
2,3 g Natriumdioctylsulfosuccinat
358,0 g 2-Ethyhexylacrylat
189,3 g Vinylacetat

Nach Erhitzen des Gemisches wurde jeweils der Rest der Monomeremulsionen mit konstanter Geschwindigkeit innerhalb von 3 Stunden hinzugefügt, wobei die Reaktionstemperatur bei 78 bis 82 °C gehalten wurde. Die erhaltene Dispersion hatte einen Feststoffgehalt von 55,8 Prozent.

Vergleichsbeispiel 2

Im Rahmen der in der deutschen Offenlegungsschrift 1 569 910 enthaltenen Angaben über die Zusammensetzung von besonders bewährten Polymerisaten (vgl. insbesondere Seite 4 unten und Seite 5 oben) wurde Beispiel 1 wiederholt, wobei folgende Monomere eingesetzt wurden :

783 g 2-Ethylhexylacrylat
99 g Acrylnitril
18 g Acrylsäure

Die erhaltene Dispersion hatte einen Feststoffgehalt von 59,6 Prozent.

Anwendungsbeispiele

Mit den nach den Beispielen 1 bis 4 und den Vergleichsbeispielen 1 und 2 erhaltenen Kunststoffdispersionen wurden Mörtelmassen hergestellt, und die Zementverträglichkeit dieser Dispersionen wurde geprüft, wie in der Beschreibung angegeben. Zum weiteren Vergleich wurde auch eine

Mörtelmasse ohne Dispersionszusatz entsprechend hergestellt und geprüft. Die Ergebnisse sind in Tabelle 1 zusammengestellt.

Ferner wurden mit den nach den Beispielen 1 und 4 erhaltenen Kunststoffdispersionen Bauklebemassen hergestellt, und die Haftfestigkeit dieser Massen wurde geprüft, wie in der Beschreibung angegeben. Zum Vergleich wurde eine Bauklebmasse ohne Dispersionszusatz entsprechend hergestellt und geprüft. Die Ergebnisse sind aus Tabelle 2 ersichtlich.

Tabelle 1

| Dispersion aus Beispiel | Einfriertemperatur des Copolymers (°C) | Ausbreitmaß (cm) sofort | Ausbreitmaß (cm) nach 15 min |
|---|---|---|---|
| 1 | -66 | 15/15 | 12,5/13 |
| 2 | -33 | 15,5/15 | 12,5/13 |
| 3 | -57,5 | 15/16 | 13,5/14 |
| 4 | -62,5 | 15,5/15 | 13/13,5 |
| Vergleich 1 | -31,5 | 13/13,5 | 10/10 |
| Vergleich 2 | -30 | nicht bestimmbar | |
| - | - | 15/15 | 12,5/13,5 |

Tabelle 2

| Dispersion aus Beispiel | Haftzugfestigkeit ($N/mm^2$) nach Lagerung a) 28d trocken | b) 7d trocken + 21 d naß | c) 21d trocken + 1 d naß |
|---|---|---|---|
| 1 | 0,78 | 0,53 | 0,48 |
| 4 | 1,8 | 1,16 | 0,9 |
| - | 0,21 | 0,12 | 0,04 |

**Patentansprüche** (für die Vertragsstaaten : BE, CH, DE, FR, GB, IT, LI, NL, SE)

1. Wäßrige, 40 bis 70 Gewichtsprozent Feststoff enthaltende Kunststoffdispersion auf Basis eines Copolymers von olefinisch ungesättigten Verbindungen, dadurch gekennzeichnet, daß das Copolymer zusammengesetzt ist aus

(a) 90 bis 97,7 Gewichtsprozent Einheiten mindestens eines olefinisch ungesättigten Monomers, das frei ist von Amid- und Sulfogruppen,

(b) 0,5 bis 5 Gewichtsprozent Einheiten mindestens eines olefinisch ungesättigten Monomers mit einer Amidgruppe und

(c) 1,8 bis 5 Gewichtsprozent Einheiten mindestens eines olefinisch ungesättigten Monomers der Formel

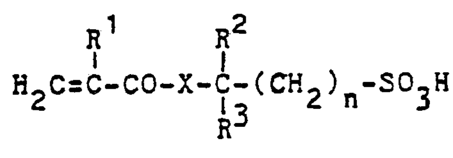

in der $R^1$, $R^2$ und $R^3$ gleich oder verschieden sind und jeweils ein Wasserstoffatom oder einen Methylrest bedeuten, X ein Sauerstoffatom oder eine Iminogruppe darstellt und n Null oder eine ganze Zahl von 1 bis 10 ist, und eine Einfriertemperatur von höchstens 20 °C aufweist.

2. Kunststoffdispersion nach Anspruch 1, dadurch gekennzeichnet, daß das Copolymer eine Einfriertemperatur von höchstens — 20 °C aufweist.

3. Kunststoffdispersion nach Anspruch 1, dadurch gekennzeichnet, daß mindestens ein Monomer der Komponente (a) ein Ester einer olefinisch ungesättigten Monocarbonsäure mit 3, 4 oder 5 Kohlenstoffatomen oder einer Dicarbonsäure mit 4 oder 5 Kohlenstoffatomen ist.

4. Kunststoffdispersion nach Anspruch 1, dadurch gekennzeichnet, daß das Monomer der Komponente (b) ein Amid einer olefinisch ungesättigten Monocarbonsäure mit 3, 4 oder 5 Kohlenstoffatomen ist.

5. Kunststoffdispersion nach Anspruch 1, dadurch gekennzeichnet, daß das Monomer der Komponente (c) eine ω-Acrylamido-ω,ω-dimethyl-alkansulfonsäure mit 1, 2 oder 3 Kohlenstoffatomen in der Alkangruppe ist.

6. Verfahren zur Herstellung einer 40 bis 70 Gewichtsprozent Feststoff enthaltenden wäßrigen Kunststoffdispersion durch Polymerisieren von olefinisch ungesättigten Verbindungen in einem wäßrigen Medium unter üblichen Bedingungen, dadurch gekennzeichnet, daß man als olefinisch ungesättigte Verbindungen, jeweils bezogen auf die Gesamtmonomermenge,

(a) 90 bis 97,7 Gewichtsprozent mindestens eines olefinisch ungesättigten Monomers, das frei ist von Amid- und Sulfogruppen,

(b) 0,5 bis 5 Gewichtsprozent mindestens eines olefinisch ungesättigten Monomers mit einer Amidgruppe und

(c) 1,8 bis 5 Gewichtsprozent mindestens eines olefinisch ungesättigten Monomers der Formel

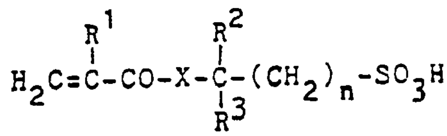

in der $R^1$, $R^2$ und $R^3$ gleich oder verschieden sind und jeweils ein Wasserstoffatom oder einen Methylrest bedeuten, X ein Sauerstoffatom oder eine Iminogruppe darstellt und n Null oder eine ganze Zahl von 1 bis 10 ist, verwendet, wobei das resultierende Copolymer eine Einfriertemperatur von höchstens 20 °C aufweist.

7. Verwendung einer Kunststoffdispersion nach Anspruch 1 als Zementzusatzmittel.

**Patentansprüche** (für den Vertragsstaat AT)

1. Verfahren zur Herstellung einer 40 bis 70 Gewichtsprozent Feststoff enthaltenden wäßrigen Kunststoffdispersion durch Polymerisieren von olefinisch ungesättigten Verbindungen in einem wäßrigen Medium unter üblichen Bedingungen, dadurch gekennzeichnet, daß man als olefinisch ungesättigte Verbindungen, jeweils bezogen auf die Gesamtmonomermenge,

(a) 90 bis 97,7 Gewichtsprozent mindestens eines olefinisch ungesättigten Monomers, das frei ist von Amid- und Sulfogruppen,

(b) 0,5 bis 5 Gewichtsprozent mindestens eines olefinisch ungesättigten Monomers mit einer Amidgruppe und

(c) 1,8 bis 5 Gewichtsprozent mindestens eines olefinisch ungesättigten Monomers der Formel

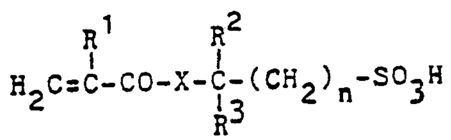

in der $R^1$, $R^2$ und $R^3$ gleich oder verschieden sind und jeweils ein Wasserstoffatom oder einen Methylrest bedeuten, X ein Sauerstoffatom oder eine Iminogruppe darstellt und n Null oder eine ganze Zahl von 1 bis 10 ist, verwendet, wobei das resultierende Copolymer eine Einfriertemperatur von höchstens 20 °C aufweist.

2. Verfahren nach Anspruch 1, dadurch gekennzeichnet, daß die Anteile der Komponenten, bezogen auf das Gewicht des resultierenden Copolymers,

(a) 90 bis 97,7 Gew.-%,
(b) 0,5 bis 5 Gew.-% und
(c) 1,8 bis 5 Gew.-%

betragen.

3. Verfahren nach Ansprüchen 1 und 2, dadurch gekennzeichnet, daß das Copolymer eine Einfriertemperatur von höchstens —20 °C aufweist.

4. Verfahren nach Ansprüchen 1 und 2, dadurch gekennzeichnet, daß mindestens ein Monomer der Komponente (a) ein Ester einer olefinisch ungesättigten Monocarbonsäure mit 3, 4 oder 5 Kohlenstoffatomen oder einer Dicarbonsäure mit 4 oder 5 Kohlenstoffatomen ist.

5. Verfahren nach Ansprüchen 1 und 2, dadurch gekennzeichnet, daß das Monomer der Komponente (b) ein Amid einer olefinisch ungesättigten Monocarbonsäure mit 3, 4 oder 5 Kohlenstoffatomen ist.

6. Verfahren nach Ansprüchen 1 und 2, dadurch gekennzeichnet, daß das Monomer der Komponente (c) eine ω-Acrylamido-ω,ω-dimethyl-alkansulfonsäure mit 1, 2 oder 3 Kohlenstoffatomen in der Alkangruppe ist.

7. Verwendung einer Kunststoffdispersion hergestellt nach Ansprüchen 1 bis 6 als Zementzusatzmittel.

**Claims** (for the Contracting States : BE, CH, DE, FR, GB, IT, LI, NL, SE)

1. An aqueous plastics dispersion having a solids content of from 40 to 70 weight % on the basis of a copolymer of olefinically unsaturated compounds, wherein the copolymer is composed of

(a) from 90 to 97.7 weight % of moieties of at least one olefinically unsaturated monomer which is free from amide and sulfo groups,

(b) from 0.5 to 5 weight % of moieties of at least one olefinically unsaturated monomer having one amide group, and

(c) from 1.8 to 5 weight % of moieties of at least one olefinically unsaturated monomer of the formula

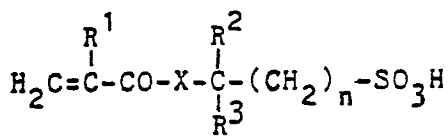

in which $R^1$, $R^2$ and $R^3$ are identical or different and represent each a hydrogen atom or a methyl radical, X is an oxygen atom or an imino group, and n is zero or an integer of from 1 to 10, and has a second order transition temperature not exceeding 20 °C.

2. The plastics dispersion as claimed in Claim 1, wherein the copolymer has a second order transition temperature not exceeding — 20 °C.

3. The plastics dispersion as claimed in Claim 1, wherein at least one monomer of component (a) is an ester of an olefinically unsaturated monocarboxylic acid having 3, 4 or 5 carbon atoms, or a dicarboxylic acid having 4 or 5 carbon atoms.

4. The plastics dispersion as claimed in Claim 1, wherein the monomer of component (b) is an amide of an olefinically unsaturated monocarboxylic acid having 3, 4 or 5 carbon atoms.

5. The plastics dispersion as claimed in Claim 1, wherein the monomer of component (c) is an ω-acrylamido-ω,ω-dimethyl-alkanesulfonic acid having 1, 2 or 3 carbon atoms in the alkane group.

6. A process for the manufacture of an aqueous plastics dispersion having a solids content of from 40 to 70 weight % by polymerization of olefinically unsaturated compounds in an aqueous medium under usual conditions, which comprises using as olefinically unsaturated compounds, based on the total amount of monomers,

(a) from 90 to 97.7 weight % of at least one olefinically unsaturated monomer which is free from amide and sulfo groups,

(b) from 0,5 to 5 weight % of at least one olefinically unsaturated monomer having one amide group, and

(c) from 1.8 to 5 weight % of at least one olefinically unsaturated monomer of the formula

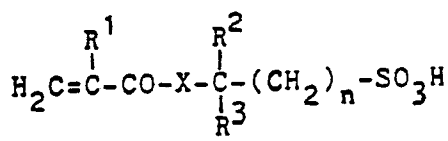

in which $R^1$, $R^2$ and $R^3$ are identical or different and represent each a hydrogen atom or a methyl radical, X is an oxygen atom or an imino group, and n is zero or an integer of from 1 to 10 ; the resulting copolymer having a second order transition temperature of up to 20 °C at most.

7. Use of a plastics dispersion as claimed in Claim 1 as cement additive.

**Claims** (for the Contracting State AT)

1. A process for the manufacture of an aqueous plastics dispersion having a solid content of from 40 to 70 weight % by polymerization of olefinically unsaturated compounds in an aqueous medium under usual conditions, which comprises using as olefinically unsaturated compounds, based on the total amount of monomers,

(a) from 90 to 97.7 weight % of at least one olefinically unsaturated monomer which is free from amide and sulfo groups,

(b) from 0.5 to 5 weight % of at least one olefinically unsaturated monomer having one amide group, and

(c) from 1.8 to 5 weight % of at least one olefinically unsaturated monomer of the formula

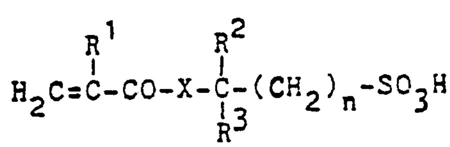

in which $R^1$, $R^2$ and $R^3$ are identical or different and represent each a hydrogen atom or a methyl radical, X is an oxygen atom or an imino group, and n is zero or an integer of from 1 to 10 ; the resulting copolymer having a second order transition temperature of up to 20 °C at most.

2. The process as claimed in Claim 1, wherein the proportions of the components, based on the weight of the resulting copolymer, are

(a) from 90 to 97.7 weight %,
(b) from 0.5 to 5 weight % and
(c) from 1.8 to 5 weight %.

3. The process as claimed in Claims 1 and 2, wherein the copolymer has a second order transition temperature not exceeding — 20 °C.

4. The process as claimed in Claims 1 and 2, wherein at least one monomer of component (a) is an ester of an olefinically unsaturated monocarboxylic acid having 3, 4 or 5 carbon atoms, or a dicarboxylic acid having 4 or 5 carbon atoms.

5. The process as claimed in Claims 1 and 2, wherein the monomer of component (b) is an amide of an olefinically unsaturated monocarboxylic acid having 3, 4 or 5 carbon atoms.

6. The process as claimed in Claims 1 and 2, wherein the monomer of component (c) is an ω-acrylamido-ω,ω-dimethyl-alkanesulfonic acid having 1, 2 or 3 carbon atoms in the alkane group.

7. Use of a plastics dispersion manufactured as claimed in Claims 1 to 6 as cement additive.

**Revendications** (pour les Etats contractants : BE, CH, DE, FR, GB, IT, LI, NL, SE)

1. Dispersion aqueuse de matière plastique, contenant 40 à 70 % en poids d'extrait sec, à base d'un copolymère de composés à insaturation oléfinique, dispersion caractérisée en ce que le copolymère a pour composition :

(a) 90 à 97,7 % en poids de motifs d'au moins un monomère à insaturation oléfinique, qui ne comporte pas de groupes amides ni sulfo,

(b) 0,5 à 5 % en poids de motifs d'au moins un monomère à insaturation oléfinique comportant un groupe amide, et

(c) 1,8 à 5 % en poids de motifs d'au moins un monomère à insaturation oléfinique, de formule :

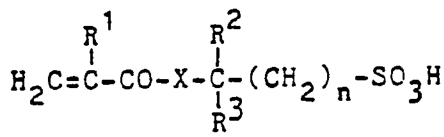

dans laquelle $R^1$, $R^2$ et $R^3$ sont identiques ou différents et représentent chacun un atome d'hydrogène ou un reste méthyle, X représente un atome d'oxygène ou un groupe imino, et n est nul ou représente un nombre entier valant 1 à 10, et en ce que le copolymère présente une température de congélation de 20 °C au maximum.

2. Dispersion de matière plastique selon la revendication 1, caractérisée en ce que le copolymère présente une température de congélation de — 20 °C au maximum.

3. Dispersion de matière plastique selon la revendication 1, caractérisée en ce qu'au moins un monomère du composant (a) est un ester d'un acide monocarboxylique à insaturation oléfinique comportant 3, 4 ou 5 atomes de carbone ou d'un acide bicarboxylique comportant 4 ou 5 atomes de carbone.

4. Dispersion de matière plastique selon la revendication 1, caractérisé en ce que le monomère du composant (b) est un amide d'un acide monocarboxylique à insaturation oléfinique comprenant 3, 4 ou 5 atomes de carbone.

5. Dispersion de matière plastique selon la revendication 1, caractérisée en ce que le monomère du composant (c) est un acide ω-acrylamido-ω,ω-diméthyl-alcane sulfonique ayant 1, 2 ou 3 atomes de carbone dans le groupe alcane.

6. Procédé de préparation d'une dispersion aqueuse de matière plastique contenant 40 à 70 % en poids d'extrait sec, par polymérisation de composés à insaturation oléfinique dans un milieu aqueux dans des conditions usuelles, procédé caractérisé en ce que l'on utilise, à titre de composés à insaturation oléfinique, les proportions étant chaque fois rapportées à la quantité totale des monomères :

(a) 90 à 97,7 % en poids d'au moins un monomère à insaturation oléfinique, qui ne comporte ni groupe amido ni groupe sulfo,

(b) 0,5 à 5 % en poids d'au moins un monomère à insaturation oléfinique comportant un groupe amide, et

(c) 1,8 à 5 % en poids d'au moins un monomère à insaturation oléfinique, de formule :

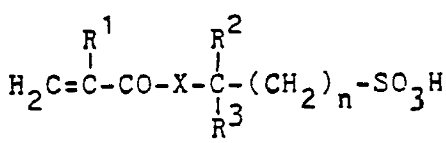

dans laquelle $R^1$, $R^2$ et $R^3$ sont identiques ou différents et représentent à chaque fois un atome d'hydrogène ou un reste méthyle, X représente un atome d'oxygène ou un groupe imino, et n est nul ou représente un nombre entier valant 1 à 10, le copolymère résultant présentant une température de congélation de 20 °C au maximum.

7. Utilisation d'une dispersion de matière plastique selon la revendication 1 comme additif pour ciments.

**Revendications** (pour l'Etat contractant AT)

1. Procédé pour préparer une dispersion aqueuse de matière plastique, contenant 40 à 70 % en poids d'extrait sec, par polymérisation, dans des conditions usuelles, de composés à insaturation oléfinique dans un milieu aqueux, procédé caractérisé en ce qu'on utilise comme composés à insaturation oléfinique, les proportions étant à chaque fois rapportées à la quantité totale des monomères :

(a) 90 à 97,7 % en poids d'au moins un monomère à insaturation oléfinique, qui ne comporte ni groupe amide ni groupe sulfo,

(b) 0,5 à 5 % en poids d'au moins un monomère à insaturation oléfinique, comportant un groupe amide, et

(c) 1,8 à 5 % en poids d'au moins un monomère à insaturation oléfinique, de formule :

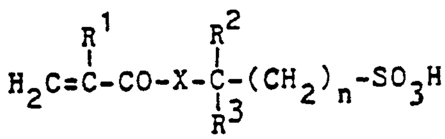

dans laquelle $R^1$, $R^2$ et $R^3$ sont identiques ou différents et représentent chacun un atome d'hydrogène ou un reste méthyle, X représente un atome d'oxygène ou un groupe imino, et n est nul ou représente un nombre entier valant 1 à 10, le copolymère résultant présentant une température de congélation de 20 °C au maximum.

2. Procédé selon la revendication 1, caractérisé en ce que les proportions des composants, par rapport au poids du copolymère résultant, sont de :

(a) 90 à 97,7 % en poids,

(b) 0,5 à 5 % en poids, et

(c) 1,8 à 5 % en poids,

3. Procédé selon les revendications 1 et 2, caractérisé en ce que le copolymère présente une température de congélation de — 20 °C au maximum.

4. Procédé selon les revendications 1 et 2, caractérisé en ce qu'au moins un monomère du composant (a) est un ester d'un acide monocarboxylique à insaturation oléfinique, comportant 3, 4 ou 5 atomes de carbone ou un acide dicarboxylique comportant 4 ou 5 atomes de carbone.

5. Procédé selon les revendications 1 et 2, caractérisé en ce que le monomère du composant (b) est un amide d'un acide monocarboxylique à insaturation oléfinique comportant 3, 4 ou 5 atomes de carbone.

6. Procédé selon les revendications 1 et 2, caractérisé en ce que le monomère du composant (c) est un acide ω-acrylamido- ω,ω-diméthyl-alcane sulfonique comportant 1, 2 ou 3 atomes de carbone dans le groupe alcane.

7. Utilisation d'une dispersion de matière plastique, préparée selon les revendications 1 à 6, à titre d'additif pour ciments.